# EUROPEAN PATENT APPLICATION

(11) **EP 1 120 311 A2**
(43) Date of publication of application: **01.08.2001**
(21) Application number: 01300687.9
(22) Date of filing: 25.01.2001
(51) Int. Cl.: B60R 1/04

(54) **Mouting assembly**

(30) Priority: 28.01.2000 BR 8000180 U
(71) Applicant: METAGAL INDUSTRIA E COMERCIO LTDA., Estado de Sao Paulo CEP:09990-090 (BR)
(72) Inventor: Myabukuro, Pedro Takashi, Santo Andre, Sao Paulo, CEP 09090-520 (BR)
(74) Representative: Johnstone, Douglas Ian

(57) **Abstract**

Rear-view mirror mounting device including a unitary first part (6) with a dovetail shaped region (20) in a base of which a resilient pawl (42) with a projection (43) at its free end is defined between two slots in the base. A second part (8) for gluing to an interior of a vehicle windscreen includes lateral chamfered edges (31) which are engaged by inwardly sloping peripheral walls (22) bounding the dovetail region (20) of the first part (6) when the first part is slid onto the second part (8). When the two parts (6, 8) become fully engaged, the projection (43) on the pawl (42) engages a trailing edge (45) of the second part (8). The first part (6) may be connected to a housing (3) accommodating a mirror (2) by a support arm (5) via an articulated mount (10).

## Description

The present invention relates to a mounting assembly for automobile accessories and more particularly to a simple and easily usable mounting assembly for rear-view mirror components.

Internal rear-view mirror arrangements are already known, which generally include the mirror itself and a housing in which the mirror is fixed, a lever actuated darkening or obfuscation mechanism which can selectively change the position of the mirror between two positions in relation to the housing, a support arm for the housing and an associated mounting device. The support arm is connected by an articulation to a rear face of the housing. An upper end of the support arm is connected by an articulation to the mounting device which is fixed by being forced onto a base that is usually glued to a windshield.

A typical prior art mounting device is essentially formed by a body of thermoplastic material, metal or similar material, normally used in the manufacture of mirrors, or mounts therefor with a part of an articulated connection that receives another part of the articulated connection forming part of the support arm. This body also includes guides for forcing it into engagement with the base fixed on the windshield. The mounting device also comprises an elastic member mounted in the body for fixing the body to the fixed base on the windshield which elastic member may incorporate the guides for forcing the body onto the base.

In an alternative known arrangement, the mounting device is directly incorporated in the upper end of the support arm, in which case the mounting device substantially comprises the upper end of the support arm and an elastic device mounted in said upper end that interacts with the base fixed to the windshield.

In a conventional construction as described above, the elastic device might comprise an elastic spring of any adequate configuration, which fits under pressure in the base that is fixed on the windshield. Since this spring is originally isolated from the body of the mounting device or from the upper end of the support arm, it is fixed in said body or said upper arm end by means of interference insertion or by a bolt, screw or other similar means.

In another prior art solution, the elastic device may comprise a seat that is provided in the upper end of the support arm, a spring inside the seat and a sphere lodged inside the seat against the spring with a sector that projects outside the seat and that engages in a recess of the base that is fixed on the windshield.

Whichever of these known arrangements is adopted, the mounting device is always composed of different elements of different materials, which elements are originally isolated and are subsequently assembled. This results in a relatively complex production process.

Another drawback that is observed is that the different materials of the separate elements react in different ways to wear, vibration, temperature variations and other factors during their useful life, which can impair the functioning of the mounting device.

Accordingly, an object of the present invention is to provide a mounting device which has a simplified structure and operation in relation to the conventional mounting devices.

Another object of the present invention is to provide a mounting device which functions effectively throughout its entire useful life.

Another object of the present invention is to provide a mounting device, which besides the above advantages, compares favourably relative to existing mounting devices for rear-view mirrors from a cost-benefit viewpoint.

Taking into consideration the above mentioned problems and with the intention to overcome them and aiming to achieve the related objectives a mounting device as set out in claim 1 has been devised. Preferred advantageous features will be apparent from the dependent claims and the following description of a preferred embodiment which is described by way of example only with reference to the accompanying Figures in which:
- Fig. 1: shows an internal rear-view mirror assembly including a mounting device according to the invention in exploded form demonstrating how parts of the assembly are assembled; and

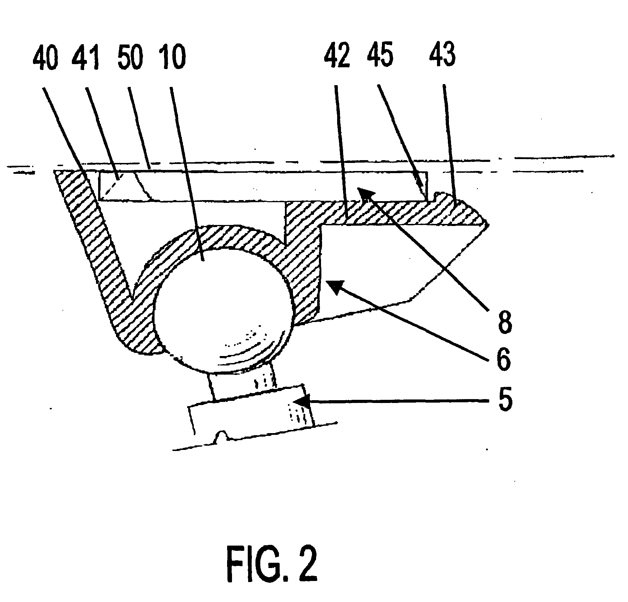

- Fig. 2: shows a cross-section on the line AA of the assembly shown in Figure 1 excluding the mirror part thereof.

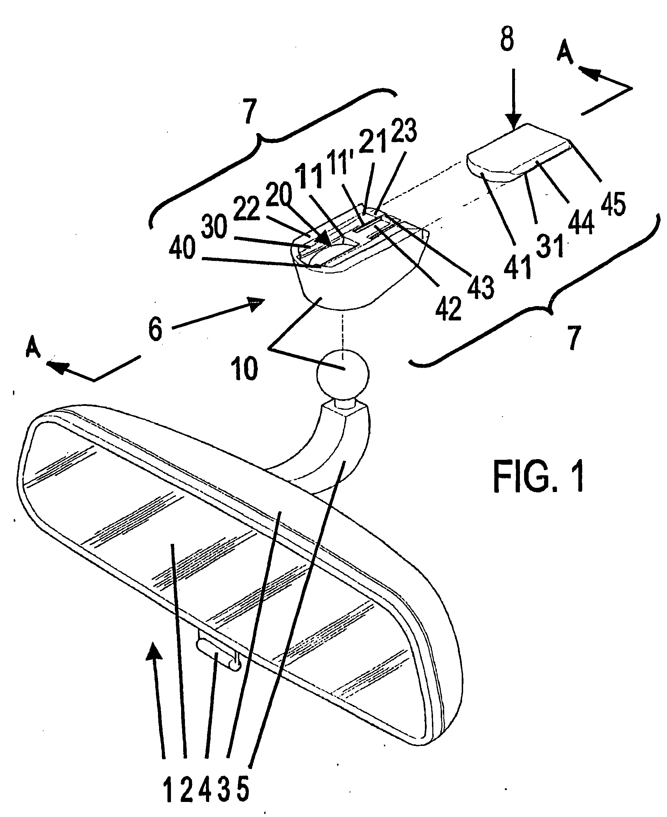

An internal rear-view mirror assembly including a mounting device in accordance with the invention for mounting on a windshield 50 of an automotive vehicle is shown in Figure 1. The assembly 1 is used for mounting a mirror plate 2, internally fixed in a housing 3, on the windshield 50. The mirror plate 2 is mounted in the housing 3 by means of a selective obfuscation or darkening device (not shown) activated by a lever 4, situated underneath the housing. The darkening device permits the mirror to be selectively placed in one of two positions relative to a support arm 5 which is connected at its lower end, by means of an articulated joint (not shown), to a rear face of the housing. An opposite or upper end of the support arm 5 is connected by means of an articulated mount 10 to a first base part 6 of the mounting device which also includes a second base part 8 substantially in the form of a small plate which remains fixed to the windshield 50 and which receives or is engaged by a fixation means 7 of the first base part 6.

The first base part 6 and the fixation means 7 for engaging the second base part 8 comprises a sole or unitary part and may be moulded using injection or other similar processes. The first base part 6 may be manufactured from a thermoplastic material, metal or some other material.

The first base part 6 thus includes an appropriately configured part of the articulated mount 10 connecting it to the support arm 5 and an upper or rear face 11 which is situated adjacent to the windshield 50 and is provided with a part 11' of small thickness which projects from the rear face 11 for engaging the second base part 8 and constitutes the fixation means 7.

The fixation means 7 includes a lodging region 20 with a rearward opening 21, located at the upper face 11, 11' which is of a sufficient size to tightly receive the second base part 8. The lodging region 20 is defined by the upper face 11, 11' and a peripheral wall 22 which projects from the upper face 11, 11' and extends from rear and lateral sides thereof and defines the rearward opening 21. The upper free edge of the upper face 11, 11', located at the rearward opening 21, has a lead-in chamfer 23 to facilitate coupling with the second base part 8.

The fixation means 7 also includes further means of engaging the first base part 6 with the second base part 8 in the form of lateral guides 30 with a swallow-tail section 30 or other similar configuration with an equivalent function. These guides are formed internally in the lateral parts of the peripheral walls 22 which are forced onto chamfers 31 formed on lateral edges of the second base part 8 fixed in the windshield 50. The chamfers are forced into the guides 30 through the rearward entrance 21 of the first base part 6.

Finally, the fixation means 7 includes elastic retention means or clips which secure the first base part 6 in engagement with the second base part 8. Such elastic retention is effected by shoulder lugs of a leading chamfered edge 41 of the second base part 8 which fit into a front part of the peripheral wall 22. A resilient pawl 42 is defined between two preferably parallel cuts or slots formed in part of the upper face 11, 11', towards its rearward end. A wedge-shaped or cuneiform projection 43 extends upwards relative to an upper face of a free end of the pawl 42, which projection 43 extends into the path of the second base part 8 as it is forced into engagement with the first base part 6. Thus, engagement of the first and second base parts 6 and 8 is effected by engagement with the leading chamfered edge 41 and a lower surface 44 of the second base part 8 and also by engagement of a rearward edge 45 of the second base part 8, which cooperates with the projection 43 at the end of forced engagement of the base parts with one another, thus retaining the base parts in interengagement.

The mounting of the mirror on the windshield 50 is thus simply effected by sliding the leading edge 41 of the first base part 6 into the rearward opening 21 of the second base part 8 and thereafter forcing the chamfered edges 31 of the second base part 8 into the lateral guides 30 of the first base part 6. As this occurs; the leading edge 41 of the second base part 8 pushes on the projection 43; the pawl 42 bends downwards; the chamfered edges 31 slide in the lateral guides 30; the leading edge 41 contacts the shoulders 40; the rearward edge 45 of the second base part 8 travels past the projection 43 and the pawl 42, through the elastic memory of its material, returns to its normal position and the projection 43 becomes positioned next to the rearward edge 45 of the second base part 8, thus retaining the base parts in interengagement.

The mounting device described above eliminates problems associated with prior art assemblies in that the use of a single unitary first base part 6 makes production easier.

On the other hand, being made from just one material, the device behaves in an uniform way taking the use conditions into consideration. This in turn reduces the chance of defects occurring during the useful life of the device.

In the event that dismounting of the mirror from the windshield becomes necessary, this can be easily achieved by compressing the projection 43 downwards and releasing the first base part 6 from the second base part 8.

Moreover, the simplicity of manufacturing and assembly of the present device leads to cost savings relative to other similar prior art devices.

The materials, configuration, details etc. of the device described above may of course be modified without departing from the scope of the invention which is defined in the appended claims.

The first base part 6 may be formed together with the end of the support arm 5. With such an arrangement there would not be an articulation between the first base page 6 and the arm 5.

The part of the articulated mount 10 that is situated in the first base part 6 may be a seat, as illustrated, that receives a sphere that is situated at the end of the support arm 5. Optionally, the said part of the articulated mount 10 of the first base part 6 may be a sphere that is coupled to a seat at the end of the arm.

The second base part 8 is preferably fixed to the windshield 50 by gluing.

## Claims

1. Rear-view mirror mounting device including a first base part (6) to which a rear-view mirror (2) is connectable, the first base part (6) comprising a one-piece integral part and including fixation means (7) for connecting the first base part(6) to a second base part (8) fixed to a windshield (50) of an automotive vehicle, the fixation means (7) comprising a lodging region (20) for receiving the second base part (8) defined by peripheral walls (22) projecting from an upper or rear face (11) of the first base part (6) and having a rearward opening (21) for receipt of the second base part (8).

2. The mounting device according to claim 1 wherein the rearward opening includes a lead-in chamfer for facilitating engagement of the second base part (8) with the first base part (6).

3. The mounting device according to claim 1 or 2 wherein the peripheral walls (22) have a swallowtail, chamfered or like configuration for engaging complementary lateral chamfers (31) of the second base part (8).

4. The mounting device according to any preceding claim wherein the first base part includes elastic retention means (40, 42, 43) which secure the second base part (8) interengaged with the first base part (6).

5. The mounting device according to claim 4 wherein the elastic retention means includes a resilient pawl (42) with a projection (43) for engaging a rearward edge(45) of the second base part (8).

6. The mounting device according to claim 5 wherein the resilient pawl (42) is defined by two slots in the upper or rear face (11) of the first base part (6).

7. The mounting device according to claims 4, 5 or 6 wherein the elastic retention means includes lugs (40) of the fixation means (7) which engage chamfered edges of the second base part (8).

8. The mounting device according to any preceding claim wherein the first base part (6) including the fixation means (7) is made from a material which can be moulded by injection or some other similar process.

9. The mounting device according to any preceding claim further including the second base part (8) for fixing to a windshield (50) of an automotive vehicle.

10. A rear-view mirror assembly (1) including a mounting device according to any preceding claim, in combination with a support arm (5) connected to the first base part (6) and supporting a housing (3) in which a mirror plate (2) is mounted.
